(19) Europäisches Patentamt / European Patent Office / Office européen des brevets

(11) **EP 3 524 551 A1**

(12) **EUROPEAN PATENT APPLICATION**
published in accordance with Art. 153(4) EPC

(43) Date of publication:
**14.08.2019 Bulletin 2019/33**

(21) Application number: **17858172.4**

(22) Date of filing: **14.09.2017**

(51) Int Cl.:
**B65G 69/20** (2006.01)   **C22B 1/00** (2006.01)
**F26B 5/16** (2006.01)

(86) International application number:
**PCT/JP2017/033182**

(87) International publication number:
**WO 2018/066333 (12.04.2018 Gazette 2018/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **04.10.2016 JP 2016196631**

(71) Applicant: **Kurita Water Industries Ltd.**
**Tokyo 164-0001 (JP)**

(72) Inventors:
• **KIKKAWA, Takashi**
 **Tokyo 164-0001 (JP)**
• **MORI, Katsumi**
 **Tokyo 164-0001 (JP)**

(74) Representative: **TBK**
**Bavariaring 4-6**
**80336 München (DE)**

(54) **METHOD FOR PREVENTING ADHESION AND CLOGGING OF MINERAL RAW MATERIAL**

(57)    Provided is a method for easily preventing adhesion and clogging of a moist mineral raw material such as coal, iron ores, dust, coke, or lime stone in transfer facilities such as pipes. A method for preventing adhesion and clogging of a mineral raw material, comprising a step of sprinkling a super absorbent resin to the moist mineral raw material before or in the course of transfer by means of conveyor belts to provide a raw material mixture, wherein the raw material mixture is transferred in transfer facilities to prevent adhesion and clogging of the mineral raw material in the transfer facilities.

**Description**

Technical Field

The present invention relates to a method for preventing adhesion and clogging of moist mineral raw materials in transfer facilities.

Background Art

When a steelmaking raw material is transported by a bulk carrier to a steelworks, water accumulated on the floor of the hold causes the steelmaking raw material at the bottom of stacked materials to turn into a slurry state. Also when the raw material is piled outdoors and stored in a raw material yard, water such as rain and sprinkled water for preventing dust may cause the raw material to turn into a slurry state.

Mineral raw material slurries, such as steelmaking raw materials that have turned into such a slurry state, are muddy fluids containing much moisture. Thus, there has been a problem in that it is difficult to convey the slurries out from the hold or the raw material yard.

Against such a problem, the present inventor has suggested a conveying method that saves time and labor for draining and improves handling by bringing a polymer absorber into contact with a steelmaking raw material slurry to solidify the steelmaking raw material slurry to thereby provide a solidified body (see Patent Literature 1).

Meanwhile, mineral raw materials that have been conveyed to a steelworks, a thermal power station, or the like and stacked outdoors in a raw material yard are further transferred from the raw material yard to the facility where the mineral raw materials are used, by changing conveyor belts. For example, when coal is supplied to a boiler in a thermal power station, the coal is generally, after changing conveyor belts, transferred through a series of lines, in which the coal passes through a coal pulverizer and a bucket conveyor, to the boiler.

The raw material yard and the conveyor belt facility, which are present outdoors, are exposed to rain, and thus the coal becomes into a wet state. The coal in a moist state, although not becoming into the slurry state described above, is likely to adhere and further stick to the contact surface of the transfer facilities such as pipes for supplying coal to the boiler (coal supplying pipes), conveyor belts, chutes, and hoppers to thereby clog the pipes and the like in some cases.

In the case where such adhesion and clogging occur, it is conventionally necessary to eliminate adhesion and clogging by halting the operation of the line and removing clogged coal or disassembling the transfer facilities. This leads to decrease in the transfer efficiency of coal, and moreover, a situation of decrease in the power generation efficiency in a thermal power station has occurred.

Citation List

Patent Literature

PTL 1: JP 2013-256710A

Summary of Invention

Technical Problem

The conveying method described in the above Patent Literature 1 is intended to reduce the fluidity of a steelmaking raw material slurry and facilitate conveyance of the solidified body thereof by conveyor belts or trucks. The method contemplates no issue of stagnated transfer of a mineral raw material to be caused by adhesion of or sticking and clogging of the mineral raw material in a moist state to transfer facilities such as pipes.

In contrast, the present invention has been made to solve a problem in that, when a mineral raw material that has been wet with rain water or the like and come into a moist state is transferred to an intended facility, the raw material adheres and sticks to the contact surface of transfer facilities such as pipes or causes clogging in the pipes and the like.

That is, it is an object of the present invention to provide a method for easily preventing adhesion and clogging of a moist mineral raw material in transfer facilities such as pipes.

Solution to Problem

The present invention is based on findings that use of a super absorbent resin improves the slidability of a moist mineral raw material on the contact surface of pipes and the like to thereby make the raw material to be unlikely to adhere.

That is, the present invention provides the following [1] to [4]:

[1] A method for preventing adhesion and clogging of a mineral raw material, wherein a raw material mixture obtained by bringing a super absorbent resin into contact with a moist mineral raw material is transferred in a transfer facility to prevent adhesion and clogging of the mineral raw material in the transfer facility.
[2] The method for preventing adhesion and clogging of a mineral raw material according to [1], wherein the transfer facility is a pipe, a conveyor belt, a conveyor chain, a chute, a hopper, or a silo.
[3] The method for preventing adhesion and clogging of a mineral raw material according to [1] or [2], comprising a step of sprinkling the super absorbent resin to the moist mineral raw material before or in the course of transfer by means of a conveyor belt to obtain the raw material mixture.
[4] The method for preventing adhesion and clogging of a mineral raw material according to any one of [1] to [3], comprising a step of adding the super absorbent resin in a container containing the moist mineral raw material and mixing the resin with the raw material under stirring to obtain the raw material mixture.

Advantageous Effects of Invention

According to the present invention, it is possible to suppress adhesion of a moist mineral raw material to the contact surface of transfer facilities such as pipes for the mineral raw material and to easily prevent adhesion and clogging in the transfer facilities.

Thus, the method of the present invention may contribute to efficient transfer of mineral raw materials.

Description of Embodiments

Hereinbelow, the method for preventing adhesion and clogging of a mineral raw material of the present invention will be described.

"Prevention of adhesion" in the present invention is used in a meaning including not only the case where there is no adhesion at all, but also the case where, even if the mineral raw material partially adheres, adhesion is suppressed enough not to impede transfer of the mineral raw material.

The method for preventing clogging of a mineral raw material of the present invention transfers a raw material mixture obtained by bringing a super absorbent resin into contact with a moist mineral raw material in transfer facilities to prevent adhesion and clogging of the mineral raw material in the transfer facilities.

The surface of the moist mineral raw material is modified by the contact with the super absorbent resin. This modification suppresses adhesiveness of the mineral raw material to the contact surface of the transfer facilities such as pipes and improves the slidability to thereby enable prevention of adhesion and clogging of the mineral raw material in the transfer facilities.

(Mineral raw material)

The type of the mineral raw material is not particularly limited, and examples thereof include coal, iron ores, dust, coke, and lime stone. These each may be one single material or may be a mixture of two or more of these.

The shape, size, and the like of the mineral raw material are not particularly limited. The present invention, which is a method for preventing clogging, is suitably applied to mineral raw materials in a form that is likely to cause clogging, for example, materials in a particulate or powder form having a particle size of a particle of 2 mm or less.

The "moist mineral raw material" used in the present invention refers to a mineral raw material which contains water, although not in a slurry state, and can be conveyed by a conveyor belt as a solidified body. That is, the moist mineral raw material is discriminated from slurries that are muddy or liquid fluids, which are difficult to convey by a conveyor belt and contain much moisture. The contained moisture in the mineral raw material in a moist state depends on the type and natures of the mineral raw material and cannot be determined unconditionally. In the case of coal, for example, the material having a moisture content of about 1 to 30% by mass can be said to be in a moist state, and the material having a moisture content of more than about 30% by mass can be said to be in a slurry state.

The origin from which the contained moisture in the mineral raw material comes is not particularly limited, and the contained water may be derived from the raw material per se or may be derived from water such as rain or sprinkled water for preventing dust with which the material came into contact during conveyance or storage.

(Super absorbent resin)

A super absorbent resin is "a resin that highly absorbs water and swells, wherein the resin is a hydrophilic material having a crosslinked structure, absorbs water on contact with water, and has a feature that it hardly dehydrates even when pressure is applied thereto, after once absorbing water", as specified in JIS K7223 (1996) and JIS K7224 (1996). That is, the resin has a high amount of water absorption and an excellent water retentivity.

The type of the super absorbent resin may be either of synthetic resin-based or natural product-based and is not particularly limited. Examples of the resin include poly(meth)acrylic acid, poly(meth)acrylates, poly(meth)acrylic acid esters, poly(meth)acrylamides, polyalkyleneimines, polyoxyalkylenes, polymaleic acid, and copolymers containing any of monomers constituting these. In the present invention, "(meth)acryl" means acryl or methacryl.

Examples of monomers constituting the poly(meth)acrylates include sodium (meth)acrylate, potassium (meth)acrylate, and ammonium (meth)acrylate.

Examples of monomers constituting the poly(meth)acrylic acid esters include methyl (meth)acrylate, ethyl (meth)acrylate, n-propyl (meth)acrylate, n-butyl (meth)acrylate, isobutyl (meth)acrylate, hydroxyethyl (meth)acrylate, and 2-ethylhexyl (meth)acrylate.

Examples of monomers constituting the polyalkyleneimines include ethyleneimine and methylethyleneimine.

Examples of monomers constituting polyoxyalkylenes include ethylene oxide and propylene oxide.

Examples of other monomers constituting the copolymers include vinylsulfonic acid, styrenesulfonic acid, N-ethyl (meth)acrylamide, and vinylpyridine.

One super absorbent resin may be used singly or two or more super absorbent resins may be used in combination. From the viewpoint of availability, high water absorption power, and the like, polyacrylic acid or sodium polyacrylate is preferably used, and sodium polyacrylate is particularly preferred.

The super absorbent resin may be used in combination with another water absorbent. Examples of another absorbent include silica gel, zeolite, and activated carbon.

As for the shape of the super absorbent resin, from the viewpoint of uniform contact over the mineral raw material surface, ease of handling, and the like, the resin is preferably in a particulate or powder form having a particle size equivalent to or smaller than that of the mineral raw material.

The amount of the super absorbent resin to be brought into contact with the mineral raw material is adjusted as appropriate depending on the type, properties and the like of the mineral raw material and the super absorbent resin. From the viewpoint of sufficient reduction in the contained water of the surface of the mineral raw material without impeding desired physical properties in applications of the mineral raw material and the viewpoint of the costs and the like, in the case of coal, the amount is preferably 0.001 to 5 parts by mass, more preferably 0.01 to 2 parts by mass, still more preferably 0.05 to 1 part by mass, based on 100 parts by mass of moist coal.

(Transfer facilities)

The transfer facilities used in the present invention refer to facilities in the transfer line to feed a mineral raw material by means of a predetermined line, for example, from the storage place of the mineral raw material such as a raw material yard to the facility in which the mineral raw material is used.
Facilities having a temporary storage function such as a chute, a hopper, and a silo are also included. Transfer by the transfer facilities is different from transportation by a cargo or truck, conveyance by means of a bucket, or the like.

The present invention can achieve a satisfactory effect of preventing adhesion and clogging in areas where inconvenience due to adhesion and clogging is likely to occur among the transfer facilities, specifically in pipes, conveyor belts, conveyor chains, chutes, hoppers, silo, and the like.

A moist mineral raw material is likely to cause adhesion and clogging in these transfer facilities. In the case of clogging, it is necessary to eliminate the clogging after the operation of the line is halted as aforementioned, and thus, time and labor have been required.

In contrast, according to the present invention, the slidability of the moist mineral raw material on the contact surface of the transfer facilities is improved and adhesion is more unlikely to occur. Accordingly, it is possible to easily prevent clogging of the mineral raw material in the transfer facilities without halting the operation of the line.

(Raw material mixture)

A raw material mixture is a mixture of a moist mineral raw material and a super absorbent resin obtained by bringing the super absorbent resin into contact with the moist mineral raw material.

When the super absorbent resin comes into contact with the moist mineral raw material, at least a portion of the contained water in the mineral raw material is absorbed by the super absorbent resin. Then, the contained water on the surface of the mineral raw material is reduced, the adhesiveness of the mineral raw material to the contact surface of transfer facilities is suppressed, and thus, the slidability is improved. It is only required that the adhesiveness to the contact surface of the transfer facilities be suppressed, and it is not necessary for the total amount of the contained water in the mineral raw material to be absorbed by the super absorbent resin.

The method for obtaining a raw material mixture by bringing a super absorbent resin into contact with a moist mineral raw material is not particularly limited, but it is preferred to obtain a raw material mixture in a state where the moist mineral raw material and the super absorbent resin are homogeneously mixed and in contact with each other.

The position at which the super absorbent resin is brought into contact is not particularly limited, and may be any of positions before, in the course of, or after transfer of the mineral raw material by means of conveyor belts.

For example, sprinkling the super absorbent resin to the moist mineral raw material before or in the course of transfer of the resin by means of the conveyor belts can provide a raw material mixture. The super absorbent resin is more preferably sprinkled on the moist mineral raw material, which is being transferred by means of conveyor belts, from the top of the mineral raw material. This sprinkling allows the mineral raw material and the super absorbent resin to be mixed at every transition between conveyor belts, and there can be obtained an entirely homogeneous raw material mixture in which the super absorbent resin homogeneously adheres to the surface of the mineral raw material.

It is also possible to obtain the raw material mixture by adding the super absorbent resin to a predetermined container containing the moist mineral raw material and mixing the resin and the raw material under stirring.

Examples

Hereinbelow, the present invention will be specifically described with reference to Examples, but the present invention is not limited to the following Examples.

[Adhesiveness evaluation test]

(Example 1)

To 1000 g of moist coal (moisture content: 15.5% by mass, particle size: 2 mm or less), 0.1% by mass of "KURILINE S-200" (manufactured by Kurita Water Industries Ltd.; sodium polyacrylate) was added as a super absorbent resin, and the coal and the resin were homogeneously mixed under stirring to prepare a raw material mixture sample.

Vibration test equipment equipped with a simulated hopper (inlet: 200 mm × 200 mm, outlet: inverted truncated quadrangular pyramid outer shape of 30 mm × 50 mm; made of steel) instead of the sieve at the top of an electric sieve ("ANF-30", manufactured by NITTO KAGAKU CO., Ltd.) was used to conduct adhesiveness evaluation test on the raw material mixture sample.

Adhesiveness was evaluated by introducing the prepared raw material mixture sample into the simulated hopper of the vibration test equipment and measuring the discharge time from the start of introduction to the completion of falling onto the tray at the lower part of the vibration test equipment.

The mass (A) of about 20 g of the coal was determined, and the mass (B) after this coal was dried in a dryer at 105°C for 2 hours was determined. Then, the moisture content of coal was calculated by the following expression by taking the reduced mass (A-B) as the moisture amount.

$$\text{Moisture content } [\%] = (A - B)/A \times 100$$

(Examples 2 to 4)

The discharge time of the raw material mixture sample was measured in the same manner as in Example 1 except that the moisture content of the coal and the amount of the super absorbent resin added were changed as shown in the following Table 1.

(Comparative Examples 1 and 2)

In Examples 1 and 3, the discharge time of the raw material mixture sample was measured in the same manner as in Example 1 except that no super absorbent resin was added.

The results of the adhesiveness evaluation test of each of Examples and Comparative Examples are summarized in Table 1.

Table 1

| | Moisture content [% by mass] | Amount of a super absorbent resin added [parts by mass] | Discharge time [seconds] |
|---|---|---|---|
| Example 1 | 15.5 | 0.1 | 5.70 |
| Example 2 | | 0.2 | 3.88 |
| Comparative Example 1 | | - | 10.16 |
| Example 3 | 17.5 | 0.1 | 8.40 |
| Example 4 | | 0.2 | 5.73 |
| Comparative Example 2 | | - | 14.13 |

As can be seen from the results shown in Table 1, it was confirmed that addition of KURILINE S-200 to the moist coal led to reduction in the discharge time of the raw material mixture sample from the simulated hopper to thereby suppress adhesion.

Visual observation of the top of the simulated hopper after the test confirmed that the amount of adhesion of the raw material mixture sample was reduced.

As described above, it can be said that addition of KURILINE S-200 to the moist coal suppresses adhesion of the coal to the contact surface of the transfer facilities and improves the slidability to thereby enable prevention of adhesion and clogging.

## Claims

1. A method for preventing adhesion and clogging of a mineral raw material, wherein a raw material mixture obtained by bringing a super absorbent resin into contact with a moist mineral raw material is transferred in a transfer facility to prevent adhesion and clogging of the mineral raw material in the transfer facility.

2. The method for preventing adhesion and clogging of a mineral raw material according to claim 1, wherein the transfer facility is a pipe, a conveyor belt, a conveyor chain, a chute, a hopper, or a silo.

3. The method for preventing adhesion and clogging of a mineral raw material according to claim 1 or claim 2, comprising a step of sprinkling the super absorbent resin to the moist mineral raw material before or in the course of transfer by means of a conveyor belt to obtain the raw material mixture.

4. The method for preventing adhesion and clogging of a mineral raw material according to any one of claims 1 to 3, comprising a step of adding the super absorbent resin in a container containing the moist mineral raw material and mixing the resin with the raw material under stirring to obtain the raw material mixture.

**EP 3 524 551 A1**

## INTERNATIONAL SEARCH REPORT

| | International application No. |
|---|---|
| | PCT/JP2017/033182 |

### A. CLASSIFICATION OF SUBJECT MATTER
Int.Cl. B65G69/20(2006.01)i, C22B1/00(2006.01)i, F26B5/16(2006.01)i

According to International Patent Classification (IPC) or to both national classification and IPC

### B. FIELDS SEARCHED
Minimum documentation searched (classification system followed by classification symbols)
Int.Cl. B65G69/20, C22B1/00, F26B5/16

Documentation searched other than minimum documentation to the extent that such documents are included in the fields searched
| | |
|---|---|
| Published examined utility model applications of Japan | 1922–1996 |
| Published unexamined utility model applications of Japan | 1971–2017 |
| Registered utility model specifications of Japan | 1996–2017 |
| Published registered utility model specifications of Japan | 1994–2017 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2014/058074 A1 (JFE STEEL CORPORATION) 17 April 2014, claims 1, 5, paragraphs [0001], [0024], [0032]–[0033], [0047], [0057]–[0059], fig. 6 & CN 104718146 A & KR 10-2015-0066583 A | 1–4 |
| Y | JP 2013-256710 A (KURITA WATER INDUSTRIES LTD.) 26 December 2013, claims 1, 3, 7, paragraphs [0001], [0035]–[0036], [0041] & KR 10-2013-0128318 A & CN 103421947 A | 1–4 |
| Y | JP 3-133813 A (MITSUBISHI HEAVY INDUSTRIES, LTD.) 07 June 1991, page 2, upper left column, line 11 to upper right column, line 5, page 3, upper left column, line 20 to upper right column, line 8, fig. 2 (Family: none) | 1–4 |

☒ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 28 November 2017 (28.11.2017) | 12 December 2017 (12.12.2017) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

7

**INTERNATIONAL SEARCH REPORT**

| | International application No. |
|---|---|
| | PCT/JP2017/033182 |

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 60-204526 A (NISSHIN STEEL CO., LTD.) 16 October 1985, page 1, lower right column, lines 10-19 (Family: none) | 1-4 |
| A | WO 2011/097357 A1 (FLSMIDTH A/S) 11 August 2011, entire text, all drawings & US 2012/0298914 A1 & CA 2788671 A | 1-4 |

Form PCT/ISA/210 (continuation of second sheet) (January 2015)

**EP 3 524 551 A1**

**REFERENCES CITED IN THE DESCRIPTION**

**Patent documents cited in the description**

- JP 2013256710 A